# EUROPEAN PATENT APPLICATION

(11) **EP 4 299 519 A1**
(43) Date of publication of application: **03.01.2024**
(21) Application number: 22779989.7
(22) Date of filing: 11.03.2022
(51) Int. Cl.: C01B 33/18

(54) **SILICA POWDER AND PRODUCTION METHOD THEREFOR**

(30) Priority: 31.03.2021 JP 2021061689
(71) Applicant: Denka Company Limited, Tokyo 103-8338 (JP)
(72) Inventor: SHIOTSUKI, Hiroyuki, Tokyo 103-8338 (JP); MINAMIKAWA, Takaaki, Tokyo 103-8338 (JP); MIYAZAKI, Koji, Tokyo 103-8338 (JP)
(74) Representative: Gulde & Partner
(86) International application number: PCT/JP2022/010943
(87) International publication number: WO 2022/209768

(57) **Abstract**

The present invention relates to silica powder having a dielectric loss tangent of 0.004 or less, in which the number of silicon metal particles in 10 g of the silica powder is 30 or less. The present invention relates to a method for producing silica powder, including a heating step of heating silica powder in the presence of chlorine. According to the present invention, silica powder having a low dielectric loss tangent and a low silicon metal content, and a method for producing the silica powder can be provided.

## Description

### Technical Field

The present invention relates to silica powder mixed with a resin and used, and a method for producing the silica powder.

### Background Art

Since data communication is made large capacity and high speed in fifth generation mobile communication system (5G), it is preferable that materials used in 5G be capable of making signal propagation high speed and be capable of reducing transmission loss of signals. Examples of the materials used in 5G include a composite material including silica powder and a resin. Since silica powder has a low dielectric constant and a low dielectric loss tangent, the composite material including silica powder and a resin possibly increases speed of signal propagation and decreases transmission loss of signals. However, when the silica powder includes magnetizable foreign matter, the dielectric loss tangent of the silica powder increases. Therefore, silica powder in which the content of magnetizable foreign matter is low has been desired. As silica powder in which the content of magnetizable foreign matter is low, silica powder described in PTL 1 is known as conventional technique, for example. In the silica powder described in PTL 1, the number of magnetizable particles of 45 µm or more measured by a specific method is zero.

### Citation List

### Patent Literature

PTL 1: WO 2019/146454

### Summary of Invention

### Technical Problem

However, silicon metal remains in silica powder even when magnetizable foreign matter is removed from silica powder in some cases. Since silicon metal has no magnetizability, it is difficult to remove silicon metal from silica powder compared with magnetizable foreign matter. When silicon metal is present in silica powder, short circuit failure possibly occurs in wiring. Therefore, silica powder with a low silicon metal content has been desired.

### Solution to Problem

The present inventors have advanced intensive studies, thereby finding out that silicon metal can be removed from silica powder by heating the silica powder in the presence of chlorine.

The present invention is based on the above finding and the summary thereof is as follows.
[1] Silica powder having a dielectric loss tangent of 0.004 or less, in which the number of silicon metal particles in 10 g of the silica powder is 30 or less.
[2] The silica powder according to [1] above, in which a content ratio of chlorine is 0.05% by mass or less.
[3] The silica powder according to [1] or [2] above, in which an average particle diameter is 0.5 to 10 µm.
[4] The silica powder according to any one of [1] to [3] above, in which a specific surface area is 1 to 8 m²/g.
[5] A method for producing silica powder, including a heating step of heating silica powder in the presence of chlorine.
[6] The method for producing silica powder according to [5] above, further including a cooling step of cooling, in an inert gas atmosphere, the silica powder heated in the heating step.

### Advantageous Effects of Invention

According to the present invention, silica powder having a low dielectric loss tangent and a low silicon metal content, and a production method therefore can be provided.

### Description of Embodiments

Hereinafter, silica powder of the present invention will be described. In the silica powder of the present invention, the number of silicon metal particles in 10 g of the silica powder is 30 or less, and the dielectric loss tangent is 0.004 or less.

### (Number of silicon metal particles in 10 g of silica powder)

When silicon metal particles are used as a silica powder raw material, the silicon metal particles may remine in the silica powder. In this case, the number of the silicon metal particles in 10 g of the silica powder of the present invention is 30 or less per 10 g. When the number of the silicon metal particles in 10 g of the silica powder is more than 30 per 10 g, short circuit failure occurs between leads in some cases when the silica powder is used as a semiconductor sealing material. From such a viewpoint, the number of the silicon metal particles in 10 g of the silica powder of the present invention is more preferably 5 or less per 10 g and still more preferably 2 or less per 10 g. The number of the silicon metal particles in 10 g of the silica powder can be measured by a method described in examples described later. Incidentally, the number of the silicon metal particles in 10 g of the silica powder can be easily adjusted to 30 or less per 10 g and further to 2 or less per 10 g by heating the silica powder in the presence of chlorine. Although a lower limit value of the range of the number of the silicon metal particles in 10 g of the silica powder of the present invention is not particularly limited, the lower limit value may be 0 per 10 g and may be 1 per 10 g.

### (Dielectric loss tangent)

A dielectric loss tangent of the silica powder of the present invention is 0.004 or less. When the dielectric loss tangent of the silica powder is more than 0.004, transmission loss cannot be sufficiently reduced in some cases, when a material including the silica powder is used as a mobile communication system. From such a viewpoint, the dielectric loss tangent of the silica powder is preferably 0.003 or less and more preferably 0.001 or less. The dielectric loss tangent of the silica powder can be measured by a method described in the examples described later. Incidentally, the dielectric loss tangent of the silica powder of the present invention may be 0.00005 or more and may be 0.0001 or more.

### (Chlorine content ratio)

A content ratio of chlorine in the silica powder of the present invention is preferably 0.06% by mass or less. The content ratio may be 0.05% by mass or less and may be 0.04% by mass or less. When the content ratio of chlorine in the silica powder is 0.05% by mass or less, occurrence of corrosion caused by chlorine in the silica powder can be suppressed. The content ratio of chlorine in the silica powder can be measured by a method described in the examples described later. Incidentally, the content ratio of chlorine in the silica powder can be made 0.05% by mass or less more easily by cooling, in an inert gas atmosphere, the silica powder heated in the presence of chlorine. Incidentally, the content ratio of chlorine in the silica powder may be 50 ppm by mass or more from the viewpoint of productivity.

### (Average particle diameter)

An average particle diameter of the silica powder of the present invention is preferably 0.5 to 10 µm. When the average particle diameter of the silica powder is 0.5 µm or more, coalescence of particles occurring in a chlorine treatment step can be suppressed, and compatibility of the silica powder with a resin is made better. When the average particle diameter of the silica powder is 10 µm or less, filling properties of the silica powder in a resin can be further enhanced. From such viewpoints, the average particle diameter of the silica powder of the present invention is more preferably 0.7 to 8 µm and still more preferably 0.8 to 5 µm. The average particle diameter of the silica powder is a median diameter of a particle size distribution measured by a laser diffraction scattering method.

### (Specific surface area)

A specific surface area of the silica powder of the present invention is preferably 1 to 8 m²/g. When the specific surface area of the silica powder is 1 m²/g or more, filling properties of the silica powder in a resin can be further enhanced. When the specific surface area of the silica powder is 8 m²/g or less, the silica particles can be prevented from coalescing together, and compatibility of the silica powder with a resin is made better. From such viewpoints, the specific surface area of the silica powder of the present invention is more preferably 2 to 7 m²/g and still more preferably 3 to 6 m²/g. The specific surface area of the silica powder can be measured by a method described in the examples described later.

### (Method for producing silica powder of present invention)

Hereinafter, an example of a method for producing the silica powder of the present invention will be described. Incidentally, the method for producing the silica powder of the present invention is not limited to the production method described below as long as the silica powder of the present invention can be produced.

The method for producing the silica powder of the present invention includes, for example, a step (A) of preparing silica powder, and a step (B) of increasing the temperature of the silica powder, keeping the heating under the presence of chlorine, and cooling same.

### (Step (A))

Silica powder is prepared in step (A). For example, the silica powder may be prepared using commercially available silica powder. In addition, the silica powder may be prepared by producing silica powder. Furthermore, the silica powder may be prepared using silica powder taken out during production of commercially available silica powder.

An average particle diameter of the silica powder prepared in step (A) is preferably 0.5 to 10 µm. When the average particle diameter of the silica powder is 0.5 µm or more, coalescence of silica particles can be prevented when the silica powder is heated in the presence of chlorine. When the average particle diameter of the silica powder is 10 µm or less, compatibility of the silica powder with a resin is made better. From such viewpoints, the average particle diameter of the silica powder prepared in step (A) is preferably 0.7 to 8 µm and still more preferably 0.8 to 5 µm. The average particle diameter of the silica powder is a median diameter of a particle size distribution measured by a laser diffraction scattering method.

### (Specific surface area)

A specific area of the silica powder prepared in step (A) is preferably 1 to 8 m²/g. When the specific surface area of the silica powder is 1 m²/g or more, compatibility of the silica powder with a resin is made better. When the specific surface area of the silica powder is 8 m²/g or less, coalescence of silica particles can be prevented when the silica powder is heated in the presence of chlorine. From such viewpoints, the specific surface area of the silica powder prepared in step (A) is more preferably 2 to 7 m²/g and still more preferably 3 to 6 m²/g. The specific surface area of the silica powder can be measured by the method described in the examples described later.

The silica powder prepared in step (A) can be produced as follows, for example.

A method for producing the silica powder prepared in step (A) includes, for example, (a) a step of preparing a silica powder raw material, (b) a step of melting and spheroidizing the silica powder raw material to produce unclassified melted spherical silica powder, (c) a step of classifying the unclassified melted spherical silica powder to produce melted spherical silica powder classified by particle size, and (d) a step of blending the melted spherical silica powder classified by particle size to produce a blended product of the melted spherical silica powder.

### (Step (a))

In step (a), a silica powder raw material is prepared. Examples of the silica powder raw material include silica rock powder obtained by pulverizing a highly pure natural silica rock, silica gel synthesized through wet reaction between an alkaline silicate and a mineral acid, a pulverized product of gel obtained from an alkoxysilane by a sol-gel method, and silicon metal particles. Among these silica powder raw materials, silica rock powder from a highly pure natural silica rock and silicon metal particles are preferable from production costs and ease in adjusting the particle size of raw material powder.

The silica rock powder serving as the silica powder raw material is produced as follows, for example. A silica rock is washed with water and subsequently pulverized using a pulverizing machine such as a vibrating mill or a ball mill to produce the silica rock powder. The particle size distribution of the produced silica rock powder is then adjusted using a vibrating sieve or a classifier.

### (Step (b))

In step (b), unclassified melted spherical silica powder is produced by melting and spheroidizing the silica powder raw material. For example, the silica powder raw material is injected into frame. As a result, the silica powder raw material is melted and simultaneously spheroidized through surface tension. The silica powder raw material droplets having passed through frame are quickly cooled to be unclassified melted spherical silica powder, which is amorphous spherical silica. For example, propane, butane, propylene, acetylene, and hydrogen are used as a fuel gas for forming frame, and air and oxygen are used as an auxiliary fuel gas.

### (Step (c))

In step (c), melted spherical silica powder classified by particle size is produced by classifying the unclassified melted spherical silica powder. For example, when the unclassified melted spherical silica powder obtained from the silica powder raw material passing through frame is collected, the unclassified melted spherical silica powder is classified by particle size and then collected. Coarse particles may be collected using a gravity settling chamber, a cyclone, or the like, and fine particles may be collected using a bag filter, an electric dust collector, or the like. Thereafter, the classified melted spherical silica powder may further be classified by particle size using a classifier such as an airflow-type classifier, a vibrating sieve, and a cylindrical sieve.

### (Step (d))

In step (d), a blended product of the melted spherical silica powder is produced by blending the melted spherical silica powder classified by particle size. For example, the melted spherical silica powder classified by particle size is blended at a ratio allowing the combination of the melted spherical silica powder classified by particle size to achieve closest packing. The blended melted spherical silica powder is mixed using a mixer such as a V-type blender, a double cone blender, and an air blender. A blended product of the melted spherical silica powder with good filling properties is produced thereby. This blended product can be used as the silica powder prepared in step (A).

### (Step (B))

Step (B) is a step of increasing the temperature of the silica powder, keeping the heating under the presence of chlorine, and cooling same.

The temperature increasing rate is preferably 1°C/min to 10°C/min, and the atmosphere during increasing temperature is preferably an inert atmosphere. During keeping the heating after increasing temperature, the silica powder is heated under the presence of chlorine. Consequently, the silicon metal particles in the silica powder react with chlorine to produce silicon tetrachloride. Silicon tetrachloride sublimates through heating, and the silicon metal particles are removed from the silicon powder thereby. Consequently, the number of silicon metal particles in 10 g of the silica powder can be easily made 30 or less per 10 g and further 2 or less per 10 g. Incidentally, when the silicon metal particles are used as the silicon powder raw material, the silicon metal particles may remain in the silica powder.

From the viewpoint of removing silicon metal in the silica powder and the viewpoint of suppressing coalescence of silica particles, the heating temperature during keeping the heating after increasing temperature is preferably 800°C to 1200°C, more preferably 800°C to 1050°C, and still more preferably 800°C to 1000°C. In addition, from the viewpoint of more strictly removing silicon metal from the silica powder and the viewpoint of efficiency of step (B), the heating time in step (B) is preferably 30 minutes to 10 hours, more preferably 70 minutes to 4 hours, and still more preferably 90 minutes to 2 hours. From the viewpoint of sublimating silicon tetrachloride produced by chlorinating silicon metal and the viewpoint of the chlorine amount in the atmosphere, chlorine treatment in a vacuum atmosphere from which the atmospheric gas can be suctioned by a vacuum pump and the like is desirable. However, from the viewpoint of productivity and costs, thermal treatment in a normal pressure atmosphere is desirable

Since chlorine has corrosivity, chlorine is preferably mixed with an inert gas such as nitrogen, argon, or dry air and supplied. From the viewpoint of removing silicon metal from the silica powder and the viewpoint of corrosivity of chlorine, the content ratio of chlorine in the atmosphere surrounding the silica powder is preferably 5% to 35% by volume and more preferably 10% to 25% by volume. Incidentally, dry air is air with a moisture amount of 3500 ppm by mass or less. The flow rate of the chlorine gas is preferably 50 to 200 L/hr.

Cooling after keeping heating is preferably conducted at a temperature decreasing rate of 1°C/min to 10°C/min in the same inert gas atmosphere as that in increasing temperature. Decreasing temperature in the presence of chlorine is not preferable because chlorine is attached to the powder surface, and the chlorine content ratio excessively increases.

### (Other steps)

The method for producing the silica powder of the present invention may further include a step of subjecting, to surface treatment with a silane coupling agent, the silica powder heated in step (B) in order to suppress aggregation of the silica powder. In addition, the method for producing the silica powder of the present invention may further include, for example, a step of conducting classification treatment for precisely removing coarse particles. Examples

Hereinafter, the present invention will be described in detail by working examples and a comparative example. Incidentally, the present invention is not limited to the following examples.

Silica powder of each of the working examples and the comparative example is evaluated as follows.

### (Dielectric loss tangent)

The dielectric loss tangent of the silica powder was measured at a frequency of 1.0 GHz using a perturbation cavity resonator measurement system (manufactured by KEYENCE CORPORATION).

### (Average particle diameter)

The particle diameter (d50) at which the accumulative frequency became 50% in the particle size distribution of the silica powder was measured as the average particle diameter using a laser particle size distribution measurement machine (product name "MT-3300EX," manufactured by NIKKISO CO., LTD.).

### (Specific surface area)

The specific surface area of the silica powder was measured by a BET method using a specific surface area measurement machine (product name "Macsorb HM model-1208," manufactured by MACSORB corporation).

### (Content ratio of chlorine)

Using an automatic sample combustion device (product name "AQF-2100 H model," manufactured by Nittoseiko Analytech Co., Ltd.), 1 g of the silica powder was heated, and the generated gas was dissolved in water. The concentration of chlorine dissolved in water was measured in accordance with JIS R 1603:2007 using ion chromatograph (product name "ICS-2100," manufactured by Thermo Fisher Scientific K.K.). The content ratio of chlorine included in the silica powder was calculated on the basis of the measurement value.

### (Number of silicon metal particles in 10 g of silica powder)

After 10 g of the silica powder was put into a 50-mL centrifugal separation tube, 40 mL of ion exchanged water was put into the centrifugal separation tube. The centrifugal separation tube with the silica powder and ion exchanged water put thereinto was placed in a plastic container with water contained therein. Incidentally, the inner diameter of the plastic container was 150 mm, and the water level of water in the plastic container was adjusted to be equal to the level of water in the centrifugal separation tube. After the plastic container with the centrifugal separation tube put thereinto was set in a homogenizer, the silica powder and ion exchanged water in the centrifugal separation tube were stirred for two minutes at an output of 700 W to prepare slurry of the silica powder and ion exchanged water. The obtained slurry was poured into a resin tray with a depth of 0.2 mm. Magnetizable foreign matter in the slurry poured into the tray was collected using a bar magnet with magnetic intensity of 12000 gausses. After the slurry from which magnetizable foreign matter was collected was returned into the centrifugal separation tube, the centrifugal separation tube was placed in a plastic container with water contained therein, followed by stirring at an output of 700 W for two minutes using a homogenizer. The stirred slurry was poured into a resin tray with a depth of 0.2 mm. Magnetizable foreign matter in the slurry was collected using a bar magnet with magnetic intensity of 12000 gausses. Such an operation including stirring of slurry and collection of magnetizable foreign matter in the slurry was repeated 10 times. The slurry was filtered using suction filtration (product name: "JAWP04700," manufactured by Millopore Corporation, pore diameter: 1 µm) after magnetizable foreign matter was collected therefrom. The entire area on the filter was observed using an optical microscope at a magnifying factor of 100, and the number of black particles was counted. Incidentally, the black particles are considered to be silicon metal particles alone since magnetizable foreign matter has been collected from the slurry.

The following silica powder was prepared.

### (Silica powder A)

A mullite container was filled with 100 g of commercially available silica powder (average particle diameter: 0.8 µm, specific surface area: 6.2 m²/g, chlorine content ratio: 0.4 ppm by mass). The mullite container filled with the silica powder was set in an alumina tubular furnace. Then, the atmosphere within the furnace was substituted by argon gas until the oxygen concentration within the furnace reached 0.0%. The temperature was increased to a heating temperature of 1000°C at a temperature increasing rate of 5°C/minute. The mullite container was heated at the heating temperature of 1000°C for 120 minutes, while supplying, at a flow rate of 500 L/hour, a mixture gas including chlorine gas and argon gas and having a chlorine gas concentration of 20% by volume. Thereafter, the gas supplied was changed to argon gas alone to substitute the atmosphere of the mixture gas including chlorine gas and argon gas by an atmosphere of argon gas alone. Then, the mullite container was cooled to room temperature at a temperature decreasing rate of 2°C/minute while substituting the atmosphere by the atmosphere of argon gas alone to obtain silica powder A. The chlorine content ratio in the atmosphere substituted by the atmosphere of argon gas alone finally became 0.1 ppm by mass or less.

### (Silica powder B)

Silica powder B was prepared in the same manner as silica powder A except that the heating temperature was changed from 1000°C to 820°C.

### (Silica powder C)

Silica powder C was prepared in the same manner as silica powder A except that the heating temperature was changed from 1000°C to 900°C.

### (Silica powder D)

Silica powder D was prepared in the same manner as silica powder A except that the chlorine gas concentration was changed from 20% by volume to 10% by volume.

### (Silica powder E)

Silica powder E was prepared in the same manner as silica powder A except that no chlorine gas was supplied.

Results are shown in Table 1.

### [Table 1]

**Table 1**

| | | Silica powder A | Silica powder B | Silica powder C | Silica powder D | Silica powder E |
|---|---|---|---|---|---|---|
| | | Working example | Working example | Working example | Working example | Comparative example |
| Raw material | Average particle diameter (µm) | 0.8 | 0.8 | 0.8 | 0.8 | 0.8 |
| | Specific surface area (m²/g) | 6.2 | 6.2 | 6.2 | 6.2 | 6.2 |
| Production conditions | Heating temperature (°C) | 1000 | 750 | 900 | 1000 | 1000 |
| | Heating time (minute) | 120 | 100 | 120 | 120 | 120 |
| | Chlorine gas concentration (% by volume) | 20 | 35 | 20 | 10 | 0 |
| Evaluation results | Chlorine content ratio (ppm by mass) | 100 | 450 | 120 | 110 | 0 |
| | Specific surface area (m²/g) | 5.8 | 6.0 | 5.9 | 5.8 | 5.9 |
| | Number of silicon metal particles in 10 g of silica powder (number/10 g) | 1 | 18 | 12 | 9 | 75 |
| | Dielectric loss tangent | 0.0007 | 0.0017 | 0.0012 | 0.0007 | 0.0008 |

From the results of the working examples, it was found that silica powder in which the number of silicon metal particles in 10 g of the silica powder was 30 or less, and the dielectric loss tangent was 0.004 or less could be produced by a silica powder production method including a heating step of heating silica powder under the presence of chlorine. In addition, the dielectric loss tangent of silica powder E, which was a comparative example, was low. This is considered to be because the content of magnetizable foreign matter in silica powder E is small. However, the number of silicon metal particles in 10 g of silica powder E was great. From these results, it is found that magnetizable foreign matter is easily removed from silica powder, but silicon metal is difficult to be removed.

## Claims

1. Silica powder having a dielectric loss tangent of 0.004 or less, wherein the number of silicon metal particles in 10 g of the silica powder is 30 or less.

2. The silica powder according to claim 1, wherein a content ratio of chlorine is 0.05% by mass or less.

3. The silica powder according to claim 1 or 2, wherein an average particle diameter is 0.5 to 10 µm.

4. The silica powder according to any one of claims 1 to 3, wherein a specific surface area is 1 to 8 m²/g.

5. A method for producing silica powder, comprising a heating step of heating silica powder in the presence of chlorine.

6. The method for producing silica powder according to claim 5, further comprising a cooling step of cooling, in an inert gas atmosphere, the silica powder heated in the heating step.
